# EUROPÄISCHE PATENTSCHRIFT

(11) **EP 1 880 252 B1**
(45) Veröffentlichungstag und Bekanntmachung des Hinweises auf die Patenterteilung: **08.10.2008**
(21) Anmeldenummer: 06742375.6
(22) Anmeldetag: 12.05.2006
(51) Int. Cl.: G03H 1/22

(54) **PROJEKTIONSVORRICHTUNG UND VERFAHREN ZUR HOLOGRAPHISCHEN REKONSTRUKTION VON SZENEN**
PROJECTION DEVICE AND METHOD FOR HOLOGRAPHIC RECONSTRUCTION OF SCENES
DISPOSITIF DE PROJECTION ET PROCEDE DE RECONSTRUCTION HOLOGRAPHIQUE DE SCENES

(30) Priorität: 13.05.2005 DE 102005023743
(43) Veröffentlichungstag der Anmeldung: 23.01.2008
(73) Patentinhaber: SeeReal Technologies GmbH, 01307 Dresden (DE)
(72) Erfinder: SCHWERDTNER, Armin, 01259 Dresden (DE)
(86) Internationale Anmeldenummer: PCT/DE2006/000896
(87) Internationale Veröffentlichungsnummer: WO 2006/119760

(56) Entgegenhaltungen:
- EP-A- 1 467 263
- WO-A-20/04031841
- DE-U1-3202004 019 51
- US-A- 4 208 086
- FUKAYA N ET AL: "EYE-POSITION TRACKING TYPE ELECTRO-HOLOGRAPHIC DISPLAY USING LIQUIDCRYSTAL DEVICES" ASIA DISPLAY, 95, 18. Oktober 1995 (1995-10-18), Seiten 963-964, XP002940561
- MISHINA T ET AL: "VIEWING-ZONE ENLARGEMENT METHOD FOR SAMPLED HOLOGRAM THAT USES HIGH-ORDER DIFFRACTION" APPLIED OPTICS, OSA, OPTICAL SOCIETY OF AMERICA, WASHINGTON, DC, US, Bd. 41, Nr. 8, 10. März 2002 (2002-03-10), Seiten 1489-1499, XP001102391 ISSN: 0003-6935
- MISHINA T ET AL: "Combination enlargement method of viewing zone for computer-generated holography" PROCEEDINGS OF THE SPIE, SPIE, BELLINGHAM, VA, US, Bd. 3956, 2000, Seiten 184-192, XP002278763 ISSN: 0277-786X

## Beschreibung

Die Erfindung betrifft eine Projektionsvorrichtung zur holographischen Rekonstruktion von Szenen mit einem räumlichen Lichtmodulator, einem Abbildungssystem mit wenigstens zwei Abbildungsmittel und einer Beleuchtungseinrichtung mit wenigstens einer Lichtquelle mit hinreichend kohärentem Licht zum Beleuchten eines in dem Lichtmodulator kodierten Hologramms. Weiterhin betrifft die Erfindung auch ein Verfahren zur holographischen Rekonstruktion von Szenen.

Bei bekannten 3D-Display- oder Projektionseinrichtungen bzw. -verfahren wird in der Regel der Stereoeffekt ausgenutzt, wobei das den Stereoeindruck erzeugende Licht von einer Ebene reflektiert oder emittiert wird. Bei der Holographie hingegen interferiert das Licht, das von dem Hologramm ausgeht, in den Objektpunkten der Szene, von wo es sich ganz natürlich ausbreitet. Holographische Darstellungen realisieren eine Objektsubstitution. Im Gegensatz dazu sind stereoskopische Darstellungen in unbewegter Form (Stills) oder in bewegter Form bei beliebigen Darstellungsformen keine Objektsubstitution. Sie stellen für das linke und für das rechte Auge zwei ebene Bilder zur Verfügung, die den Augenpositionen entsprechen. Der dreidimensionale Effekt entsteht durch die Parallaxe in den beiden Bildern. Bei der holographischen Darstellung entfallen die von der Stereoskopie bekannten Probleme wie Ermüdung oder Augen- und Kopfschmerzen, da prinzipiell kein Unterschied beim Betrachten von holographischen rekonstruierten Szenen und natürlichen Szenen besteht.

Die Holographie wird allgemein in statische und dynamische Verfahren unterschieden. Bei der statischen Holographie werden sehr oft photographische Medien zur Aufzeichnung eingesetzt. Dabei wird mittels eines Referenzstrahles, welcher mit einem die Objektinformation tragenden Lichtstrahl überlagert wird, ein Interferenzbild auf dem photographischen Medium aufgezeichnet. Diese statische Objektinformation wird mit einem dem Referenzstrahl ähnlichen oder gleichen Strahl holographisch rekonstruiert. Jedoch sind beispielsweise die Unterhaltungsindustrie wie auch die Medizin- und Militärtechnik schon seit langem wegen der idealen räumlichen Eigenschaften an einer Echtzeitdarstellung von bewegten Szenen mittels der dynamischen Holographie interessiert. In den meisten Fällen werden so genannte Mikro-Displays eingesetzt, wie sie auch in Projektionseinrichtungen verwendet werden. Beispiele für Mikro-Displays sind LCoS (Liquid Crystal on Silicon), transmissive LCD oder MEMS (Micro Electro Mechanical Systems). Da ihr Pixel-Pitch, also der Abstand der Pixel-Mittelpunkte, im Vergleich zu anderen Displays klein ist, wird ein vergleichsweise großer Beugungswinkel erreicht. Ein wesentlicher Nachteil der bisher bekannten dynamischen Holographieverfahren mit Mikro-Displays liegt darin, dass die Größe der Rekonstruktionen bzw. der rekonstruierten Szene durch die Größe der Mikro-Displays erheblich eingeschränkt ist. Mikro-Displays und ähnliche Lichtmodulatoren besitzen eine Größe von wenigen Zoll und trotz des relativ kleinen Pitchs immer noch einen so kleinen Beugungswinkel, dass eine beidäugige Betrachtung kaum möglich ist. Beispielsweise erzeugt ein sehr kleiner Pitch von 5 µm bei einer Wellenlänge λ = 500 nm (blau-grün) einen Beugungswinkel von etwa 0,1 rad. Bei 50 cm Betrachterabstand ergibt das eine laterale Ausdehnung von 5 cm, wodurch eine beidäugige Betrachtung verhindert wird.

Zur dreidimensionalen Darstellung von dynamischen Hologrammen, in der Regel computergenerierten Hologrammen, werden in holographischen Rekonstruktionseinrichtungen transmissive und reflektive Lichtmodulatoren eingesetzt, die auf Technologien wie TFT, LCoS, MEMS, DMD (digital micromirror device), OASLM (Optically Addressed Spatial Light Modulator), EASLM (Electronically Addressed Spatial Light Modulator), FLCD (Ferroelectric Liquid Crystal Display) oder anderen beruhen. Derartige Lichtmodulatoren können ein- oder zweidimensional ausgeführt sein. Der Grund für den Einsatz reflektiver Lichtmodulatoren liegt in ihrer preiswerten Fertigung, dem großen Füllfaktor für eine hohe Lichteffizienz, der kurzen Schaltzeit sowie den geringen Lichtverlusten durch Absorption im Vergleich zu transmissiven Displays. Allerdings müssen die geringen räumlichen Ausdehnungen in Kauf genommen werden.

Aus der WO 03/060612 ist ein reflektives LC-Display mit einer Auflösung von ca. 12 µm und einem Reflektionsgrad bis zu 90% zur farbigen Echtzeitdarstellung von Hologrammen bekannt. Die Rekonstruktion erfolgt mit dem kollimierten Licht einer oder mehrerer LED über eine Feldlinse. Mit dieser Auflösung ist eine Betrachtung in ca. 1 m Entfernung nur innerhalb eines Bereichs von ca. 3 cm Ausdehnung möglich, wodurch die rekonstruierte Szene nicht gleichzeitig mit beiden Augen, also dreidimensional, betrachtet werden kann. Außerdem lassen sich durch die geringen Abmessungen des Displays nur relativ kleine Objekte rekonstruieren.

In der WO 02/095503 ist eine holographische 3D-Projektionseinrichtung beschrieben, welche zur Hologrammdarstellung einen DMD-Chip verwendet. Trotz der ebenfalls relativ hohen Auflösung, der hohen Reflektivität und der geringen Schaltzeit des Lichtmodulators lassen sich auch hier aus denselben Gründen wie zu der WO 03/060612 beschrieben nur Szenen mit geringen Abmessungen rekonstruieren und in einem relativ kleinen Bereich beobachten. Der Grund liegt auch hier wiederum in dem durch die Abmessungen des Lichtmodulators und des kleinen Beobachterbereichs festgelegten Rekonstruktionsraum. Zudem eignen sich DMD-Chips wegen ihrer bedingten Kohärenz kaum für holographische Zwecke.

Die WO 00/75699 beschreibt ein holographisches Display, welches ein Videohologramm mit Hilfe von Teilhologrammen rekonstruiert. Dieses Verfahren ist auch unter dem Begriff Tiling bekannt. Dabei werden über einen sehr schnellen Elektronisch Adressierbaren Spatial Light Modulator (EASLM) kodierte Teilhologramme sequentiell in eine Zwischenebene abgebildet, wobei der Prozess so schnell erfolgt, dass ein Beobachter die Rekonstruktionen aller Teilhologramme als eine einzige Rekonstruktion eines 3D-Objektes wahrnimmt. Um die Teilhologramme in der Zwischenebene matrixförmig anzuordnen, dient ein spezielles Beleuchtungs- und Abbildungssystem, beispielsweise mit einem Shutter, der synchron mit dem EASLM gesteuert wird und immer nur das jeweilige Teilhologramm durchlässt und insbesondere die nicht genutzten Beugungsordnungen ausblendet. Die Anforderungen an die dynamischen Eigenschaften des zur Darstellung der Teilhologramme verwendeten SLM sind erheblich und eine flache Bauweise erscheint kaum möglich.

WO 2004/031841 offenbart eine holographische Projektionsvorrichtung zur Darstellung einer rekonstruierten dreidimensionalen Szene mit einer vergrösserten Abbildung eines Lichtmodulators. Ein EASLM als erster Lichtmodulator wird mittels einer Vergrösserungslinse auf einen OASLM als zweiten Lichtmodulator abgebildet, um so ein vergrössertes Bild des ersten Lichtmodulators zu erzeugen.

Die oben erwähnten bekannten Lösungen weisen zusammengefasst folgende wesentlichen Nachteile auf. Die räumliche Ausdehnung der Rekonstruktion wird durch die geringe Größe der zur Hologrammdarstellung verwendeten Lichtmodulatoren beschränkt. Durch das in der WO 00/75699 beschriebene Tiling-Verfahren lassen sich zwar größere Szenen rekonstruieren, jedoch nur mit erheblicher Bautiefe. Wegen der verwendeten größeren Pixelanzahl steigen der Aufwand zur Berechnung des Hologramms sowie die Anforderungen an die Datenrate erheblich, was eine Echtzeitdarstellung erschwert. Beim sequentiellen Tiling wie aus der WO 00/75699 bekannt, ergeben sich erhöhte Anforderungen an die dynamischen Eigenschaften des verwendeten SLM.

Die Aufgabe der vorliegenden Erfindung besteht nun darin, eine Projektionsvorrichtung zur holographischen Rekonstruktion von zwei- und dreidimensionalen Szenen zu schaffen, welche die erwähnten Nachteile des Standes der Technik beseitigt und innerhalb eines großen Rekonstruktionsraumes Szenen in beliebiger Größe rekonstruiert und sichtbar darstellt, so dass mit einer geringen Anzahl von optischen Elementen einfach, kostengünstig und mit hoher Qualität räumlich ausgedehnte bewegte Szenen rekonstruiert werden.

Die Aufgabe wird hinsichtlich der Projektionsvorrichtung mit den Merkmalen des Anspruchs 1 und hinsichtlich des Verfahrens mit den Merkmalen des Anspruchs 18 gelöst.

Erfindungsgemäß wird diese Aufgabe durch eine Projektionsvorrichtung zur holographischen Rekonstruktion von Szenen mit einem Lichtmodulator, einem Abbildungssystem mit wenigstens zwei Abbildungsmittel und einer Beleuchtungseinrichtung mit wenigstens einer Lichtquelle mit hinreichend kohärentem Licht zum Beleuchten eines in dem Lichtmodulator kodierten Hologramms gelöst, wobei die wenigstens zwei Abbildungsmittel derart zueinander angeordnet sind, dass ein erstes Abbildungsmittel zur vergrößerten Abbildung des Lichtmodulators auf ein zweites Abbildungsmittel und das zweite Abbildungsmittel zur Abbildung einer Ebene eines Raumfrequenzspektrums des Lichtmodulators in eine wenigstens ein virtuelles Betrachterfenster aufweisende Betrachterebene vorgesehen sind, wobei das virtuelle Betrachterfenster einer Beugungsordnung des Raumfrequenzspektrums entspricht und die rekonstruierte Szene durch dieses Betrachterfenster beobachtbar ist.

Erfindungsgemäß weist die Projektionsvorrichtung neben dem Lichtmodulator und der Beleuchtungseinrichtung zum Aussenden von hinreichend kohärentem Licht ebenfalls ein Abbildungssystem mit dem ersten und dem zweiten Abbildungsmittel auf. Der Lichtmodulator ist ein räumlicher Lichtmodulator mit geringer Ausdehnung und wird deshalb nachfolgend als Mikro-SLM bezeichnet. Der Mikro-SLM wird vergrößert mittels des ersten Abbildungsmittels auf das zweite Abbildungsmittel abgebildet, wobei das Raumfrequenzspektrum (Fourierspektrum) des Mikro-SLM mittels des zweiten Abbildungsmittels in das virtuelle Betrachterfenster abgebildet wird. Das Betrachterfenster ist somit die Abbildung der verwendeten Beugungsordnung der Fourierebene des Hologramms. Damit das erste Abbildungsmittel den gesamten Mikro-SLM auf das zweite Abbildungsmittel abbilden kann, müssen alle Beiträge einer gewünschten Beugungsordnung durch das erste Abbildungsmittel erfasst werden. Dies erfolgt durch Fokussierung des von dem Mikro-SLM modulierten Lichts in die Ebene des ersten Abbildungsmittels, in der das Raumfrequenzspektrum erzeugt wird. Dazu kann der Mikro-SLM mit einer Welle, die in Lichtrichtung nach dem Mikro-SLM konvergiert, beleuchtet werden. In der Ebene des Raumfrequenzspektrums befinden sich demzufolge die Fourierebene des Mikro-SLM und zugleich das erste Abbildungsmittel. Durch das zweite Abbildungsmittel wird zusammen mit dem Betrachterfenster ein kegelstumpfförmiger Rekonstruktionsraum, auch als Frustrum bezeichnet, definiert. In diesem wird eine rekonstruierte Szene, vorteilhafterweise eine rekonstruierte dreidimensionale Szene, einem oder mehreren Betrachtern dargeboten. Der Rekonstruktionsraum setzt sich rückwärtig über das zweite Abbildungsmittel hinaus beliebig weit fort. Durch das Betrachterfenster kann der Betrachter somit die rekonstruierte Szene in dem großen Rekonstruktionsraum beobachten. Unter hinreichend kohärentem Licht wird hier Licht verstanden, welches interferenzfähig für die Darstellung einer dreidimensionalen Szene ist.

Eine derartige erfindungsgemäße Projektionsvorrichtung weist somit nur eine geringe Anzahl von optischen Elementen zur holographischen Rekonstruktion auf.

An die Qualität der optischen Elemente werden, verglichen mit bekannten optischen Aufbauten, geringe Anforderungen gestellt. Auf diese Weise wird ein kostengünstiger, einfacher und kompakter Aufbau der Projektionsvorrichtung gewährleistet, wobei Lichtmodulatoren geringer Abmessung eingesetzt werden können. Dies können beispielsweise bisher in Projektionseinrichtungen eingesetzte Mikro-SLM sein. Die begrenzte Größe des Mikro-SLM begrenzt auch die Anzahl der Pixel. Dadurch kann die Berechnungszeit des Hologramms erheblich gesenkt werden, was wiederum dazu führt, dass gegenwärtig verfügbare Rechentechnik eingesetzt werden kann.

In einer vorteilhaften Ausgestaltung der Erfindung kann vorgesehen sein, dass ein Raumfrequenzfilter in der Ebene, in der das Raumfrequenzspektrum des Lichtmodulators vorliegt, angeordnet ist.

Ein- oder zweidimensionale Hologramme, die auf Mikro-SLM in Pixeln kodiert sind, wobei die Pixel regulär angeordnet sind, erzeugen in der Fourierebene eine periodische Wiederholung des Raumfrequenzspektrums. Zur Unterdrückung oder Ausschaltung der Periodizität kann vorteilhafter Weise ein Raumfrequenzfilter, hier insbesondere eine Blende, in dieser Ebene angeordnet sein, welcher nur die verwendete Beugungsordnung passieren lässt. In der Regel überlappen sich die einzelnen Beugungsordnungen, so dass die Blende Information abschneidet oder ungewünschte Information passieren lässt. Durch eine Tiefpass-Filterung der auf dem Mikro-SLM dargestellten Information können die einzelnen Beugungsordnungen aber voneinander separiert werden, wodurch eine Beschneidung der Information durch die Blende ausgeschlossen wird. Die Blende kann als Raumfrequenzfilter verallgemeinert werden, welcher die gewünschte Beugungsordnung herausfiltert, Quantisierungsfehler oder andere Fehler des Mikro-SLM abblockt oder das Wellenfeld auf andere geeignete Weise moduliert, beispielsweise zur Kompensation von Aberrationen der Projektionsvorrichtung. Dies geschieht zum Beispiel, indem der Raumfrequenzfilter eine asphärische Linsenfunktion hinzufügt.

Von Vorteil ist außerdem, dass die Reduzierung des Raumfrequenzspektrums auf eine Beugungsordnung und die Abbildung dieser Beugungsordnung sowie der Blende als Betrachterfenster jegliches Übersprechen verhindern, das üblicherweise bei Rekonstruktionen unter Verwendung von matrixförmigen Lichtmodulatoren auftritt. Damit lassen sich im Multiplex-Verfahren nacheinander ein linkes und rechtes Auge eines Betrachters ohne Übersprechen bedienen. Ebenso ist ein Multiplex-Verfahren für mehrere Personen nur dadurch möglich.

Für Lichtmodulatoren, die keine reguläre Pixelstruktur aufweisen, also kein Sampling bewirken, enthält auch die Fourierebene keine Periodizität. Eine Blende kann somit entfallen. Derartige Lichtmodulatoren sind beispielsweise OASLM.

In einer weiteren vorteilhaften Ausgestaltung kann zur Bildung des Raumfrequenzspektrums ein drittes Abbildungsmittel enthalten sein, das nahe dem Lichtmodulator angeordnet ist.

Das dritte Abbildungsmittel erzeugt das Raumfrequenzspektrum als Fourier-Transformierte des in dem Mikro-SLM kodierten Hologramms in seiner bildseitigen Brennebene. Die Verwendung eines dritten Abbildungsmittels ist bei kollimierter Beleuchtung besonders vorteilhaft, da ohne dieses Abbildungsmittel nur Licht mit entsprechend großem Beugungswinkel das erste Abbildungsmittel erreicht. Beispielsweise kann das dritte Abbildungsmittel vor oder hinter dem Mikro-SLM angeordnet sein. Demnach fokussiert das dritte Abbildungsmittel das vom Mikro-SLM ausgehende Licht bzw. die ausgehende Welle in seine bildseitige Brennebene. Es ist aber auch möglich, dass von dem Mikro-SLM eine leicht konvergierende Welle ausgeht, deren Fokussierung durch Einsatz eines weiteren Abbildungsmittels verstärkt wird. Jedoch muss das dritte Abbildungsmittel bei der Beleuchtung mit einer konvergierenden Welle nicht vorhanden sein, da vorteilhafterweise die auf den Mikro-SLM fallende Rekonstruktions-Welle derart eingestellt werden kann, dass sie annähernd in der Ebene des ersten Abbildungsmittels konvergiert. In allen Fällen entsteht jedoch immer eine Brennebene, die Fourierebene des Mikro-SLM, in der auch das erste Abbildungsmittel angeordnet ist.

Um die Betrachterfenster in einem großen Bereich für den Betrachter bzw. die Betrachter verfügbar zu machen, kann ein Positionserfassungssystem zur Bestimmung einer Augenposition wenigstens eines Betrachters beim Beobachten einer rekonstruierten Szene enthalten sein.

Das Positionserfassungssystem erfasst die Augenpositionen oder Pupillenpositionen der oder des Betrachter(s) beim Beobachten der rekonstruierten Szene. Entsprechend der Augenposition des Betrachters wird die Szene kodiert. Daraufhin kann das Betrachterfenster entsprechend der neuen Position der Augen nachgeführt werden. Insbesondere sind raumfeste Darstellungen mit wirklichkeitsgetreuer Änderung der Perspektive und Darstellungen mit übertriebener Änderung der Perspektive vorgesehen. Darunter ist zu verstehen, dass die Winkel- und Positionsänderung der Szene größer ist als die Winkel- und Positionsänderung des Betrachters.

Zur Nachführung des wenigstens einen Betrachterfensters entsprechend der Augenposition des Betrachters ist wenigstens ein Ablenkelement in der Projektionsvorrichtung enthalten. Derartige Ablenkelemente können mechanische, elektrische oder optische Elemente sein.

Das Ablenkelement kann beispielsweise in der Ebene des ersten Abbildungsmittels als ein steuerbares optisches Element angeordnet sein, das wie ein Prisma das Spektrum virtuell verschiebt. Es ist aber auch möglich, ein Ablenkelement nahe dem zweiten Abbildungsmittel vorzusehen. Dieses Ablenkelement besitzt dann die Wirkung eines Prismas und optional die Wirkung einer Linse. Dadurch wird ein laterales und optional ein axiales Nachführen des Betrachterfensters erzielt. Diese Anordnung des Ablenkelements nahe dem zweiten Abbildungsmittel ist besonders vorteilhaft, weil das gesamte Abbildungssystem von der Lichtquelle bis zum zweiten Abbildungsmittel statisch ist. Das heißt, der Strahlengang bis zum zweiten Abbildungsmittel bleibt immer konstant. Dies minimiert erstens die Anforderungen an diesen Teil des optischen Systems, da die Eintrittsöffnung des ersten und des zweiten Abbildungsmittels minimal gehalten werden können. Bei einer Verschiebung des Mikro-SLM oder dessen Bild zwecks Nachführung des Betrachterfensters müsste ansonsten die Eintrittsöffnung des ersten und zweiten Abbildungsmittels immer größer sein. Das verringert erheblich die Anforderungen an das zweite Abbildungsmittel. Zweitens kann dieser statische Teil des optischen Systems optimal in seinen Abbildungseigenschaften korrigiert werden. Drittens verschiebt sich die Abbildung des Mikro-SLM auf dem zweiten Abbildungsmittel nicht. Dadurch ist beispielsweise die Position der Rekonstruktion einer zweidimensionalen Szene auf dem zweiten Abbildungsmittel unabhängig von der Betrachterposition.

Die Aufgabe wird erfindungsgemäß weiterhin durch ein Verfahren zur holographischen Rekonstruktion von Szenen, bei dem ein Abbildungssystem mit wenigstens zwei Abbildungsmittel hinreichend kohärentes Licht einer Beleuchtungseinrichtung mit wenigstens einer Lichtquelle in eine Betrachterebene abbildet, gelöst, wobei die wenigstens eine Lichtquelle einen mit einem Hologramm kodierten Lichtmodulator beleuchtet, wobei in einem ersten Schritt in einer Ebene eines ersten Abbildungsmittels ein Raumfrequenzspektrum als Fourier-Transformierte des kodierten Hologramms entsteht, wonach in einem zweiten Schritt das erste Abbildungsmittel den Lichtmodulator in eine Ebene eines zweiten Abbildungsmittels abbildet, wobei das zweite Abbildungsmittel das Raumfrequenzspektrum aus der Ebene des ersten Abbildungsmittels in wenigstens ein virtuelles Betrachterfenster der Betrachterebene abbildet, wodurch eine rekonstruierte Szene in einem von dem zweiten Abbildungsmittel und dem virtuellen Betrachterfenster aufgespannten Rekonstruktionsraum wenigstens einem Betrachter vergrößert dargeboten wird und durch die vergrößerte Abbildung des Lichtmodulators der Rekonstruktionsraum in seiner Größe ausgedehnt wird.

Erfindungsgemäß wird zur Rekonstruktion einer Szene mit einer kohärenten oder hinreichend kohärenten Beleuchtung in einem ersten Schritt in der Ebene des ersten Abbildungsmittels das Raumfrequenzspektrum als Fourier-Transformierte des im Lichtmodulator, hier ein Mikro-SLM, kodierten Hologramms gebildet. Dem folgt in einem zweiten Schritt die Abbildung des Mikro-SLM mittels des ersten Abbildungsmittels in eine Ebene auf das zweite Abbildungsmittel, wodurch der Mikro-SLM vergrößert wird. Die Abbildung des Mikro-SLM auf das zweite Abbildungsmittel bedeutet, dass der Mikro-SLM auch in unmittelbarer Nähe zu dem zweiten Abbildungsmittel abgebildet werden kann. Nach der vergrößerten Abbildung des Mikro-SLM erfolgt in einem dritten Schritt die Abbildung des Raumfrequenzspektrums aus der Ebene des ersten Abbildungsmittels über das zweite Abbildungsmittel in die Betrachterebene und bildet in der Betrachterebene ein virtuelles Betrachterfenster. Der Rekonstruktionsraum, welcher durch das Betrachterfenster und das zweite Abbildungsmittel aufgespannt wird und in welchem die rekonstruierte Szene einem Betrachter oder mehreren Betrachtern vergrößert dargeboten wird, ist dementsprechend ebenfalls vergrößert ausgebildet. Zu beachten ist, dass der Rekonstruktionsraum nicht durch das zweite Abbildungsmittel und das Betrachterfenster begrenzt ist, sondern rückwärtig über das zweite Abbildungsmittel hinaus sich erstreckt.

Mit Hilfe des erfindungsgemäßen Verfahrens lassen sich somit gleichzeitig oder nacheinander zwei- und/oder dreidimensionale Szenen in hoher Qualität vergrößert in einem großen Rekonstruktionsraum zur Beobachtung darstellen. Bei gemischten 2D/3D- Darstellungen ist es vorteilhaft, die Ebene der 2D-Darstellung innerhalb der dreidimensionalen Szene zu legen. Für eine reine zweidimensionale Darstellung kann die Ebene der 2D-Darstellung vorteilhafterweise in das zweite Abbildungsmittel gelegt werden. In dieser Ebene erscheint dann die vergrößerte Abbildung des Mikro-SLM, der in diesem Fall mit dem zweidimensionalen Bild kodiert wird. Vorteilhaft kann das zweidimensionale Bild auch auf den Betrachter hinbewegt oder von ihm wegbewegt werden.

In einer vorteilhaften Ausgestaltung des Verfahrens kann vorgesehen sein, dass Aberrationen der Abbildungsmittel bei der Berechnung des Hologramms berücksichtigt und durch den Lichtmodulator kompensiert werden.

Aberrationen führen zu Störungen im Frequenzspektrum und in den Abbildungen, die die Rekonstruktionen in ihrer Qualität beeinflussen. Durch die Positionierung des ersten Abbildungsmittels in die Fourierebene des Mikro-SLM wird erreicht, dass die Fokussierung eine minimale laterale Ausdehnung des ersten Abbildungsmittels für die Abbildung bewirkt. Dadurch kann gewährleistet werden, dass Aberrationen des ersten Abbildungsmittels minimiert werden. Außerdem muss gewährleistet sein, dass das erste Abbildungsmittel den Mikro-SLM vollständig und in seiner Ausleuchtung homogen auf das zweite Abbildungsmittel vergrößert abbildet. Auch Aberrationen des zweiten und eventuell weiteren Abbildungsmittel können durch den Mikro-SLM kompensiert werden. Die bei Aberrationen auftretenden Phasenfehler lassen sich leicht durch einen entsprechenden zusätzlichen Phasenhub korrigieren.

Ebenso ist es möglich, dass ein Raumfrequenzfilter Aberrationen der in der Projektionsvorrichtung eingesetzten Abbildungsmittel kompensiert.

Weitere Ausgestaltungen der Erfindung ergeben sich aus den restlichen Unteransprüchen. Im nachfolgenden wird die Erfindung anhand der in den Figuren näher beschriebenen Ausführungsbeispiele prinzipmäßig erläutert. Dabei wird das Prinzip der Erfindung anhand einer holographischen Rekonstruktion mit monochromatischem Licht beschrieben. Der Gegenstand der Erfindung ist jedoch auch für farbige holographische Rekonstruktionen anwendbar, worauf im Ausführungsbeispiel noch näher eingegangen wird.

Die Figuren zeigen:
- Figur 1: eine prinzipmäßige Darstellung einer erfindungsgemäßen Projektionsvorrichtung zur holographischen Rekonstruktion von Szenen mit einem Abbildungssystem;
- Figur 2: einen Ausschnitt der in Figur 1 dargestellten Projektionsvorrichtung beim Auftreffen einer geneigten ebenen Welle auf einen Lichtmodulator;
- Figur 3: einen Ausschnitt der in Figur 1 dargestellten Projektionsvorrichtung beim Auftreffen einer konvergierenden Welle auf den Lichtmodulator;
- Figur 4: eine weitere Ausführungsform der erfindungsgemäßen Projektionsvorrichtung mit einem reflektiven Lichtmodulator und einem Strahlteilerelement;
- Figur 5: ein in der Projektionsvorrichtung enthaltenes Ablenkelement zum Nachführen eines Betrachterfensters;
- Figur 6: eine weitere Möglichkeit für eine Nachführung des Betrachterfensters in der Projektionsvorrichtung;
- Figur 7: eine weitere Ausführungsform der erfindungsgemäßen Projektionsvorrichtung mit einem Hohlspiegel als zweites Abbildungsmittel; und
- Figur 8: die in Fig. 1 dargestellte Projektionsvorrichtung bei Betrachtung eines einzelnen rekonstruierten Punktes der Szene.

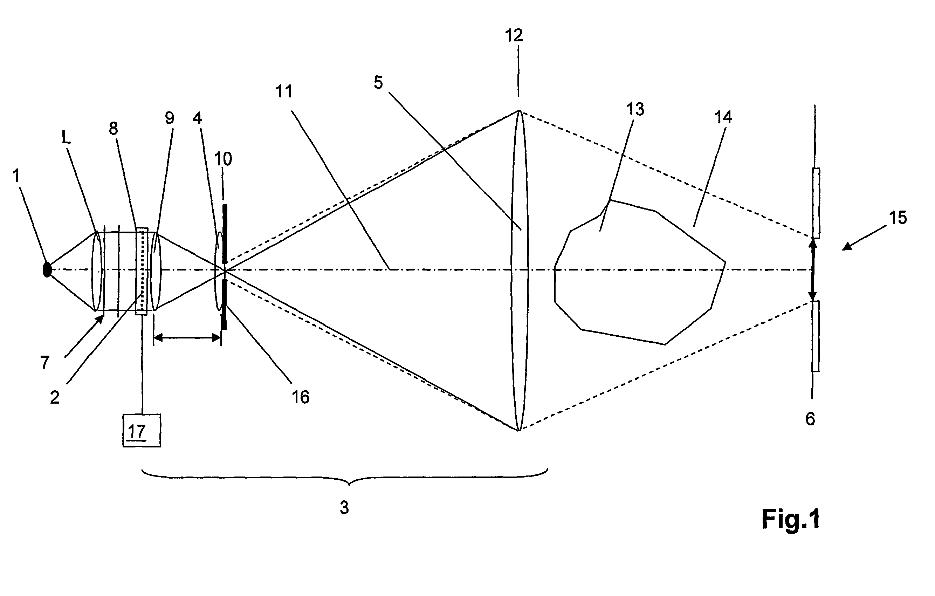

In Figur 1 ist die erfindungsgemäße Projektionsvorrichtung prinzipmäßig dargestellt, wobei ein Abbildungssystem 3 eine Beleuchtungseinrichtung 1, hier eine punktförmige Lichtquelle, in eine Betrachterebene 6 abbildet. Das Abbildungssystem 3 weist ein erstes Abbildungsmittel 4 und ein zweites Abbildungsmittel 5 auf. Die Lichtquelle 1 erzeugt kohärentes oder hinreichend kohärentes Licht, das für eine holographische Rekonstruktion einer Szene erforderlich ist. Als Lichtquelle 1 können Laser, LED(s) oder auch andere Lichtquellen dienen, wobei auch eine Farbfilterung vorgenommen werden kann.

Anhand von Figur 1 wird die Wirkungsweise der Projektionsvorrichtung beschrieben. Eine von der Lichtquelle 1 ausgesandte Welle wird mittels einer Kollimatorlinse L zu einer ebenen Welle 7 umgewandelt. Die somit von der Lichtquelle 1 ausgehende und nach Durchtritt durch die Kollimatorlinse L als eben angenommene Welle 7 trifft senkrecht auf einen transmissiven räumlichen Lichtmodulator 8 mit regulär angeordneten Pixeln, welcher ein kodiertes dynamisches Hologramm 2, z.B. ein CGH, darstellt, wobei die Wellenfront der ebenen Welle 7 an äquidistanten Orten in dem räumlichen Lichtmodulator 8 zu einer gewünschten Wellenfront moduliert wird. Der räumliche Lichtmodulator 8 weist eine kleine Ausdehnung auf und wird deshalb im nachfolgenden als Mikro-SLM bezeichnet.

In Strahlrichtung nach dem Mikro-SLM 8 ist ein drittes Abbildungsmittel 9 angeordnet. Das dritte Abbildungsmittel 9, hier eine Linse, die bei einem transmissiven räumlichen Mikro-SLM 8 auch vor diesem angeordnet sein kann, erzeugt bei Beleuchtung mit der ebenen Welle 7 in seiner bildseitigen Brennebene 10 ein Raumfrequenzspektrum als Fourier-Transformierte der in dem Mikro-SLM 8 kodierten Information. Das Raumfrequenzspektrum kann auch als Fourierspektrum bezeichnet werden. Bei Beleuchtung des Mikro-SLM 8 mit nicht ebenen konvergierenden oder divergierenden Wellen verschiebt sich die Brennebene 10 entlang einer optischen Achse 11.

Bei der Beleuchtung des Mikro-SLM 8 mit einer ebenen Welle und Wegfall des dritten Abbildungsmittels 9 in der Projektionsvorrichtung könnte nur Licht mit entsprechend großem Beugungswinkel das zweite Abbildungsmittel 5 erreichen.

Das erste Abbildungsmittel 4 ist in unmittelbarer Nähe der Brennebene 10 des dritten Abbildungsmittels 9 angeordnet. Dieses erste Abbildungsmittel 4 bildet den Mikro-SLM in eine Ebene 12 auf das zweite Abbildungsmittel 5 oder in unmittelbarer Nähe dazu vergrößert ab. Das zweite Abbildungsmittel 5 ist hier eine Linse, welche im Vergleich zu den anderen Abbildungsmitteln 4 und 9 wesentlich größer ausgebildet ist, um eine möglichst große Szene 13 in einem Rekonstruktionsraum (Frustrum) 14 zu rekonstruieren. Bei der Abbildung des Mikro-SLM 8 in die Ebene 12 wird gleichzeitig dessen Raumfrequenzspektrum mittels des zweiten Abbildungsmittels in die Betrachterebene 6 abgebildet. Auf diese Weise wird ein virtuelles Betrachterfenster 15 gebildet, welches physisch nicht vorhanden ist und dessen Ausdehnung der Abbildung einer Periode des Raumfrequenzspektrums entspricht. Der Betrachter oder auch die Betrachter können durch das Betrachterfenster 15 die rekonstruierte Szene 13 beobachten. Die Rekonstruktion der Szene 13 entsteht in dem pyramidenstumpfförmigen Rekonstruktionsraum 14, der zwischen den Rändern des Betrachterfensters 15 und dem zweiten Abbildungsmittel 5 aufgespannt wird. Der Rekonstruktionsraum 14 kann sich jedoch auch beliebig weit rückwärtig über das zweite Abbildungsmittel 5 hinaus erstrecken.

Aufgrund der äquidistanten Abtastung der Information durch den als matrixförmig angenommenen Mikro-SLM 8 erzeugt dieser in der Brennebene 10 des dritten Abbildungsmittels 9 in periodischer Fortsetzung mehrere Beugungsordnungen. Diese periodische Wiederholung weist ein Periodizitätsintervall in der Brennebene 10 auf, dessen Größe reziprok zum Pitch des Mikro-SLM 8 ist. Der Pitch entspricht dabei dem Abstand der Abtastorte im Mikro-SLM 8. Das zweite Abbildungsmittel 5 bildet dabei die periodische Verteilung in der Brennebene 10 in die Betrachterebene 6 ab. Ein Betrachter innerhalb einer Beugungsordnung in der Betrachterebene 6 würde die rekonstruierte Szene 13 zwar ungestört mit einem Auge sehen, das andere Auge des Betrachters könnte aber gleichzeitig die höheren Beugungsordnungen als Störungen wahrnehmen.

Für matrixartig organisierte räumliche Lichtmodulatoren, welche eine geringe Auflösung, nämlich Pixelpitch >> λ (Rekonstruktionswellenlänge), aufweisen, kann der Periodizitätswinkel in Näherung durch □λ/*pitch* ⊏ beschrieben werden. Bei einer Wellenlänge von λ = 500 nm und einem Pitch von 10 µm in dem Mikro-SLM 8 würde ein Beugungswinkel von ca. ± 1/20 rad erreicht werden. Diesem Winkel entspricht bei einer Brennweite des dritten Abbildungsmittels 9 von 20 mm eine laterale Ausdehnung des Periodizitätsintervalls von ca. 1 mm.

Zur Unterdrückung der Periodizität ist eine Blende 16 in der Brennebene 10 hinter dem ersten Abbildungsmittel 4 angeordnet, die nur ein Periodizitätsintervall bzw. nur die gewünschte Beugungsordnung durchlässt. Die Blende wirkt in diesem Fall als Tief-, Hoch- oder Bandpassfilter. Die Blende 16 wird über das zweite Abbildungsmittel 5 in die Betrachterebene 6 abgebildet und formt dort das Betrachterfenster 15. Der Vorteil des Vorhandenseins der Blende 16 in der Projektionsvorrichtung liegt darin, dass ein Übersprechen weiterer Perioden auf das andere Auge oder auf Augen eines weiteren Betrachters verhindert wird. Eine Voraussetzung dafür ist aber ein bandbegrenztes Raumfrequenzspektrum des Mikro-SLM 8.

Bei räumlichen Lichtmodulatoren, die keine Periodizität in der Brennebene 10 aufweisen, wie z.B. optisch adressierbare Lichtmodulatoren (OASLM), ist es nicht notwendig die Blende 16 einzusetzen.

Oft sind räumliche Lichtmodulatoren matrixförmig organisiert. Das Raumfrequenzspektrum in der Brennebene 10 wird demnach periodisch fortgesetzt sein. Andererseits wird in der Regel die dreidimensionale Szene eine Kodierung des Hologramms 2 auf dem Mikro-SLM 8 erfordern, dessen Raumfrequenzspektrum größer als das Periodizitätsintervall in der Brennebene 10 ist. Dies führt dann zu Überlappungen der Beugungsordnungen. Die Blende 16 in dieser Brennebene 10 würde dann einen informationstragenden Teil der genutzten Beugungsordnung abschneiden und andererseits höhere Beugungsordnungen passieren lassen. Um diese Effekte zu unterdrücken, kann durch vorhergehende Filterung die dreidimensionale Szene im Raumfrequenzspektrum der Brennebene 10 begrenzt werden. Die vorhergehende Filterung bzw. die Begrenzung der Bandbreite wird bereits bei der Berechnung des Hologramms 2 mit berücksichtigt und mit einberechnet. Somit sind die bandbegrenzten Beugungsordnungen voneinander getrennt. Die Blende 16 in der Brennebene 10 blockt dann die höheren Beugungsordnungen ab, ohne die ausgewählte Beugungsordnung zu begrenzen. Das vorher bedingte Übersprechen auf das andere Auge oder auf Augen eines weiteren Betrachters wird unterdrückt bzw. verhindert.

Die Blende 16 kann auch zu einem Raumfrequenzfilter erweitert werden. Der Raumfrequenzfilter ist ein komplexwertiges Modulationselement, das die einfallende Welle in ihrer Amplitude und/oder Phase verändert. Somit dient der Raumfrequenzfilter neben der Separierung der Beugungsordnungen noch zu anderen Funktionen, z.B. zur Unterdrückung von Aberrationen des dritten Abbildungsmittels 9.

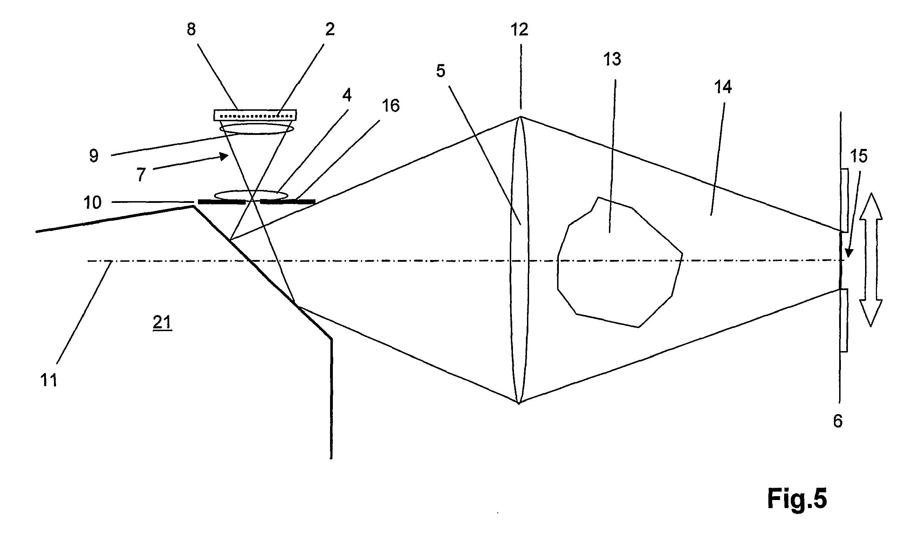

Bei Bewegung der Augen des Betrachters bzw. der Betrachter ist in der Projektionsvorrichtung zur Nachführung des Betrachterfensters 15 ein Positionserfassungssystem 17 enthalten, welches die aktuelle Augenposition des Betrachters beim Beobachten der rekonstruierten Szene 13 erfasst. Diese Information wird verwendet, um das Betrachterfenster 15 mit geeigneten Mitteln nachzuführen. Die Kodierung des Holgramms 2 auf dem Mikro-SLM 8 kann somit entsprechend der aktuellen Augenposition angepasst werden. Die rekonstruierte Szene 13 wird dabei derart umkodiert, dass diese in Abhängigkeit von der Position des Betrachters horizontal und/oder vertikal verschoben und/oder im Winkel gedreht sichtbar wird. Insbesondere sind raumfeste Darstellungen mit wirklichkeitsgetreuer Änderung der Perspektive und Darstellungen mit übertriebener Änderung der Perspektive vorgesehen. Unter letzterem wird verstanden, dass die Winkel- und Positionsänderung des Objekts größer ist als die Winkel- und Positionsänderung des Betrachters. Zur Nachführung des Betrachterfensters 15 entsprechend der Augenposition weist die Projektionsvorrichtung ein hier in Figur 1 nicht dargestelltes Ablenkelement auf, welches in Figur 5 näher gezeigt ist.

Bei geringer Auflösung des Mikro-SLM 8 lässt das Betrachterfenster 15 nicht die gleichzeitige Beobachtung der rekonstruierten Szene 13 mit beiden Augen zu. Das andere Auge des Betrachters kann dann sequentiell in einem weiteren Betrachterfenster oder gleichzeitig in einem parallelen Strahlengang angesteuert werden. Bei hinreichend hoher Auflösung des Mikro-SLM 8 können durch räumliches Multiplexing die Hologramme für das rechte und das linke Auge auf einem Mikro-SLM kodiert werden.

Bei Verwendung von eindimensionalen räumlichen Lichtmodulatoren kann nur eine eindimensionale Rekonstruktion stattfinden. Ist der eindimensionale räumliche Lichtmodulator vertikal ausgerichtet, wird die Rekonstruktion auch nur vertikal erfolgen. Bei diesen vertikal kodierten Hologrammen weist das Raumfrequenzspektrum des räumlichen Lichtmodulators in der Brennebene 10 nur in vertikaler Richtung eine periodische Wiederholung auf. Die den eindimensionalen räumlichen Lichtmodulator verlassende Lichtwelle dehnt sich entsprechend in horizontaler Richtung aus. Bei Verwendung von eindimensionalen räumlichen Lichtmodulatoren ist daher durch zusätzliche fokussierende optische Elemente, beispielsweise Zylinder-Linsen, eine Fokussierung senkrecht zur Rekonstruktionsrichtung vorzunehmen.

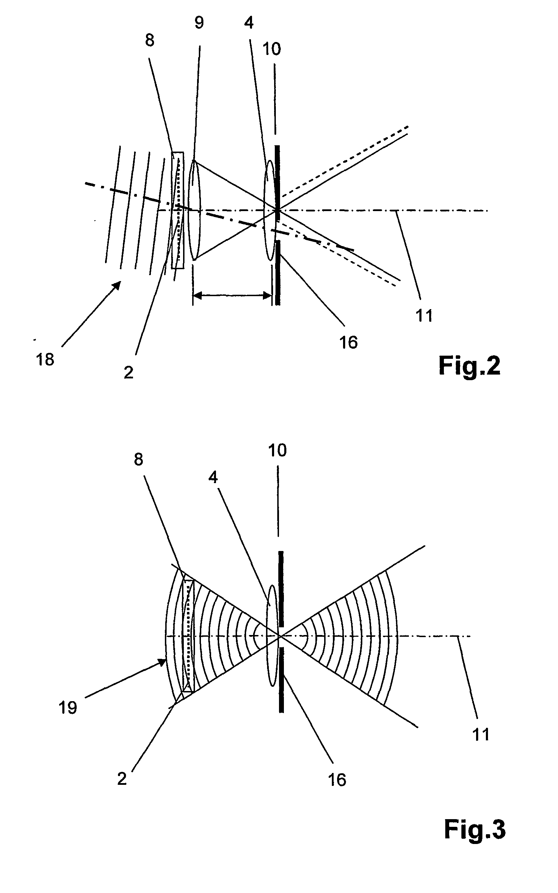

Figur 2 zeigt einen Ausschnitt der in Figur 1 dargestellten Projektionsvorrichtung. Dieser Ausschnitt zeigt den Mikro-SLM 8 mit den Abbildungsmitteln 4 und 9 und der Blende 16. Anstelle der senkrecht auf den Mikro-SLM 8 auftreffenden ebenen Welle 7 wie in Figur 1 wird in diesem Ausführungsbeispiel eine geneigte ebene Wellenfront 18 verwendet. Dies ist insbesondere dann von Vorteil, wenn im Hologramm 2 die Detour-Phasen-Kodierung angewendet wird. Bei der Detour-Phasen-Kodierung, also mit einem reinen Amplitudenhologramm, trifft die geneigte Welle auf benachbarte Pixel mit den erforderlichen Phasen. Beispielsweise stimmen bei geeigneter Wahl der Wellenfront-Neigung alle dritten Pixel in ihren Phasen überein (Burckhardt-Kodierung). Drei Pixel kodieren dann jeweils einen komplexen Wert. Bei Verwendung der Detour-Phasen-Kodierung blockt man außer der meist verwendeten 1. oder -1. Beugungsordnung alle anderen Beugungsordnungen ab.

Ist dies der Fall, wird das Zentrum der nullten Beugungsordnung in der Brennebene 10 senkrecht zu der Achse 11 verschoben, wie mit den gestrichelten Randstrahlen dargestellt. Das erste Abbildungsmittel 4 und die Blende 16 werden so angeordnet, dass die 1. oder -1. Beugungsordnung durchgelassen wird, wie an den durchgezogenen Randstrahlen erkennbar.

In Figur 3 ist ebenfalls ein Ausschnitt der in Figur 1 dargestellten Projektionsvorrichtung gezeigt, wobei zur Rekonstruktion statt der senkrecht einfallenden ebenen Welle eine konvergierende Welle 19 verwendet wird. Wie hier dargestellt, kann das dritte Abbildungsmittel 9 im Falle einer konvergenten Beleuchtung entfallen, wenn die konvergierende Welle 19 so eingestellt wird, dass im Fokus der konvergierenden Welle 19 das erste Abbildungsmittel 4 angeordnet ist und in der Brennebene 10 das Raumfrequenzspektrum des auf dem Mikro-SLM 8 kodierten Hologramms 2 entsteht. Bei Änderung der Konvergenz der einfallenden Welle verschiebt sich der Konvergenzpunkt entsprechend entlang der optischen Achse 11.

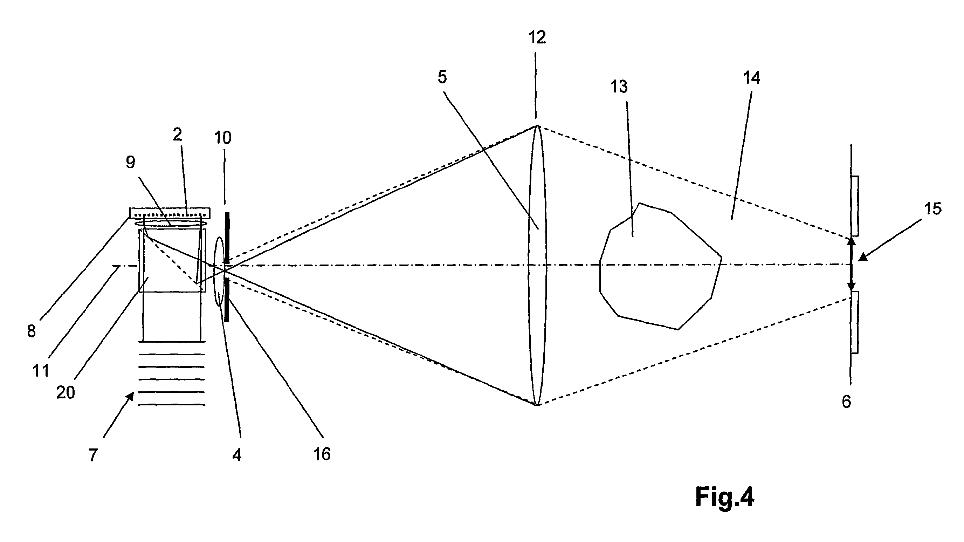

Figur 4 zeigt eine weitere Ausführungsform der erfindungsgemäßen Projektionsvorrichtung mit einem reflektiven Mikro-SLM 8 und einem Strahlteilerelement 20. Das Strahlteilerelement 20 ist zwischen dem dritten Abbildungsmittel 9 und dem ersten Abbildungsmittel 4 zur Strahlführung der auftreffenden ebenen Welle 7 angeordnet. Das Strahlteilerelement 20 kann ein einfacher oder dichroitischer Teilerwürfel, ein halbdurchlässiger Spiegel oder auch ein anderes Strahleinkopplungsmittel sein.

Da der Mikro-SLM 8 in diesem Ausführungsbeispiel ein reflektiver Mikro-SLM ist und somit durch die Reflektion ein doppelter Weg des Lichtes zurückgelegt werden muss, ist die Kodierung des Hologramms 2 entsprechend anzupassen. Die Einkopplung der Lichtwelle 7 über einen dichroitischen Strahlteiler ist bei sequentieller Rekonstruktion der Szene 13 in den drei Grundfarben RGB (Rot-Grün-Blau) besonders von Vorteil. Die drei Lichtquellen für die einzelnen Grundfarben sind in diesem Ausführungsbeispiel nicht dargestellt. Die Rekonstruktion der Szene erfolgt wie zu Figur 1 beschrieben. Der besondere Vorteil der sequentiellen Rekonstruktion liegt im identischen optischen Strahlengang. Lediglich die Kodierung ist der Rekonstruktion mit unterschiedlichen Wellenlängen λ anzupassen.

Eine Weiterbildung dieses Ausführungsbeispieles kann darin bestehen, dass für jede der drei Grundfarben RGB ein getrennter Kanal geschaffen wird, welcher eine Lichtquelle in einer bestimmten Grundfarbe, einen Mikro-SLM 8, Abbildungsmittel 4 und 9 und eine Blende 16 bzw. einen Raumfrequenzfilter enthält. Auch hier kann das dritte Abbildungsmittel 9 bei konvergierenden Wellen der Beleuchtung entfallen. Zur weiterführenden Kombination der Kanäle können ebenfalls Strahlteilerelemente verwendet werden. Beispielsweise kann zur simultanen farbigen Rekonstruktion der Szene 13 ein Strahlteilerelement vorgesehen werden, das aus vier aneinander gesetzten Einzelprismen aufgebaut ist, zwischen denen sich dichroitische Schichten mit unterschiedlicher wellenlängenabhängiger Transmission und Reflektion befinden. An drei Seitenflächen wird jeweils das Licht des Kanals einer Grundfarbe eingekoppelt, das überlagert an der vierten Seitenfläche austritt. Dieses aus den drei Grundfarben kombinierte Licht gelangt danach zum zweiten Abbildungsmittel 5, um die farbige Szene zu rekonstruieren.

Auch parallele Anordnungen der drei Kanäle sind möglich. Das zweite Abbildungsmittel 5 kann dabei für alle drei Kanäle gemeinsam genutzt werden. Auf diese Weise erfolgt die farbige Rekonstruktion der Szene simultan.

Weiterhin ist möglich, für jedes Auge des Betrachters einen Kanal vorzusehen. Dabei enthält wieder jeder Kanal eine monochromatische Lichtquelle einer Grundfarbe, einen Mikro-SLM 8, Abbildungsmittel 4 und 9 sowie eine Blende 16. Das zweite Abbildungsmittel 5 kann auch hier für beide Kanäle gemeinsam genutzt werden. Die beiden Kanäle bilden hierbei ihre Betrachterfenster auf die Augen des Betrachters ab.

Eine Kanalisierung für jedes Auge des Betrachters, wobei jeder Kanal drei Kanäle entsprechend der drei Grundfarben RGB enthält, ist ebenfalls möglich.

Bei allen oben erwähnten Möglichkeiten der farbigen Rekonstruktion ist darauf zu achten, dass die zu den drei Grundfarben gehörigen Rekonstruktionen deckungsgleich sind.

Auch für die oben erwähnten Beispiele kann bei Bewegung des Betrachters das Betrachterfenster 15 entsprechend der Augenposition nachgeführt werden. In Figur 5 ist prinzipmäßig die Nachführung des Betrachterfensters 15 dargestellt. Um die Nachführung des Betrachterfensters 15 entsprechend dem in der Figur dargestellten Pfeil in der Betrachterebene 6 durchzuführen, werden die Lichtstrahlen nach der Brennebene 10 mittels eines Ablenkelements 21, hier ein Polygonspiegel, abgelenkt. Auf diese Weise wird das Betrachterfenster 15 dem Betrachter nachgeführt. Als Ablenkelemente 21 können mechanische Ablenkelemente, wie Polygonspiegel, Galvanospiegel, Prismen, oder auch optische Ablenkelemente, wie steuerbare Gitter oder andere Beugungselemente, eingesetzt werden.

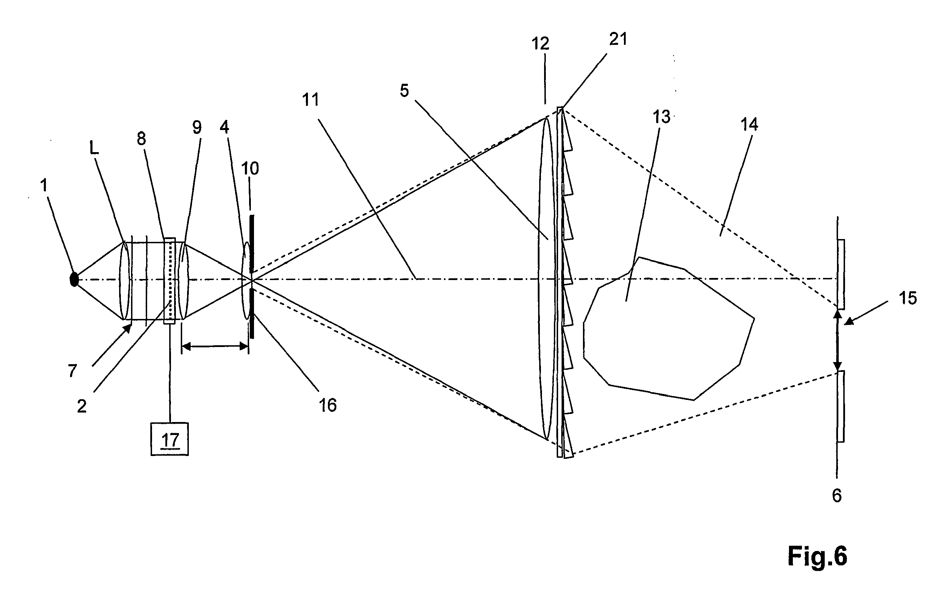

Besonders vorteilhaft ist eine Nachführung des Betrachterfensters 15 nach Figur 6. Hier hat das Ablenkelement 21 eine Funktion eines steuerbaren Prismas. Das Ablenkelement 21 ist nahe dem zweiten Abbildungsmittel 5, also in Strahlrichtung vor oder hinter ihm angeordnet oder in das Abbildungsmittel 5 selbst integriert.

Dieses Ablenkelement 21 hat neben der Wirkung eines Prismas optional die Wirkung einer Linse. Dadurch wird ein laterales und optional ein axiales Nachführen des Betrachterfensters 15 erreicht.

Ein derartiges Ablenkelement 21 mit Prismenfunktion kann beispielsweise hergestellt werden, indem mit doppelbrechenden Flüssigkristallen gefüllte prismenförmige Elemente in ein Substrat aus transparentem Material eingebettet werden bzw. von einem Substrat mit im Vergleich zu den Elementen unterschiedlichem Brechungsindex umgeben sind. Der Winkel, um den ein Lichtstrahl durch eines dieser Elemente abgelenkt wird, hängt vom Verhältnis der Brechungsindizes des Substratmaterials und des Flüssigkristalls ab. Mit einem an diese Elemente angelegten elektrischen Feld wird die Ausrichtung der Flüssigkristalle und somit der effektive Brechungsindex gesteuert. Auf diese Weise kann mit einem elektrischen Feld der Ablenkwinkel gesteuert und somit das Betrachterfenster 15 dem Betrachter nachgeführt werden.

Es ist ebenso möglich, durch Verschiebung der Lichtquelle 1 senkrecht zur optischen Achse 11 das Betrachterfenster 15 nachzuführen. Das erste Abbildungsmittel 4 und die Blende 16 müssen dabei entsprechend der neuen Lage des Brennpunktes in der Brennebene 10 verschoben werden. Auch hier ist dann um den Brennpunkt in der Brennebene 10 herum die nullte Beugungsordnung des Mikro-SLM 8 angeordnet.

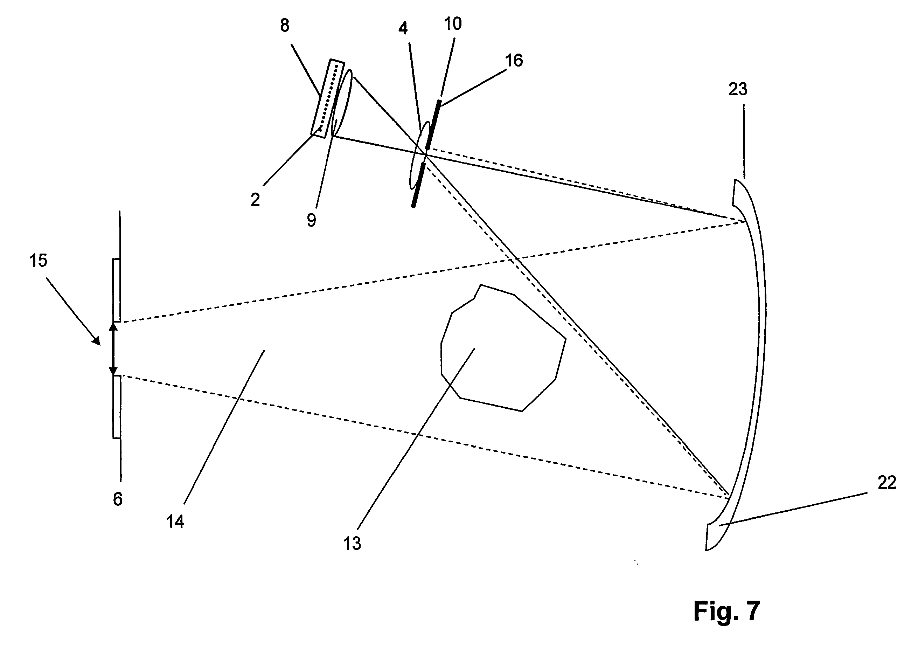

Figur 7 zeigt eine weitere Ausführungsform der erfindungsgemäßen Projektionsvorrichtung mit einem Hohlspiegel 22 anstatt der in Figur 1 gezeigten Linse als zweites Abbildungsmittel 5. Die Vorgehensweise der Rekonstruktion entspricht der der zu Figur 1 beschriebenen Weise. Jedoch bildet hier das erste Abbildungsmittel 4 den Mikro-SLM 8 nicht in die Ebene 12, sondern in eine Ebene 23 auf den Hohlspiegel 22 oder in unmittelbarer Nähe dazu ab. Durch die Reflektion der Welle an dem Hohlspiegel 22 wird das Betrachterfenster 15 entsprechend dieser Reflektion gebildet. Dementsprechend wird der Rekonstruktionsraum 14, in dem die rekonstruierte Szene 13 zu beobachten ist, zwischen dem Betrachterfenster 15 und dem Hohlspiegel 22, gebildet. Der Rekonstruktionsraum 14 kann sich, wie bereits erwähnt, rückwärtig beliebig weit über den Hohlspiegel 22 hinaus erstrecken. Auf diese Weise lässt sich eine kompaktere Projektionsvorrichtung schaffen. Ein weiterer Vorteil der Verwendung des Hohlspiegels 22 liegt in der besser erreichbaren Aberrationsfreiheit, einfacheren Fertigung sowie im geringen Gewicht im Gegensatz zu dem Einsatz einer Linse.

Von besonderem Vorteil ist die Verwendung eines flachen fokussierenden Spiegels als Abbildungsmittel 5. Dieses Abbildungsmittel 5 kann als holographisches optisches Element (HOE) oder auch diffraktives optisches Element (DOE) ausgeführt sein. Das Abbildungsmittel 5 weist ein Phasenmuster auf, das nach Reflektion die Rekonstruktionswelle in das Betrachterfenster 15 konvergieren lässt. Das als HOE oder DOE ausgeführte Abbildungsmittel 5 erfüllt demnach die gleiche Funktion wie der Hohlspiegel 22. Der Vorteil eines HOE oder eines DOE liegt in einer flachen Ausgestaltung und in einer kostengünstigen Herstellung. Derartige Spiegel können nach bekannten Verfahren, z.B. interferometrisch, lithographisch, durch Prägen, Abformen und anschließende Aushärtung, Extrudieren, oder auf andere Weise hergestellt werden. Sie bestehen aus Photo- oder Resist-Material, aus Polymeren, aus Metall, Glas oder anderen Substraten. Sie können außerdem reflektierende Schichten auf einem Relief aufweisen.

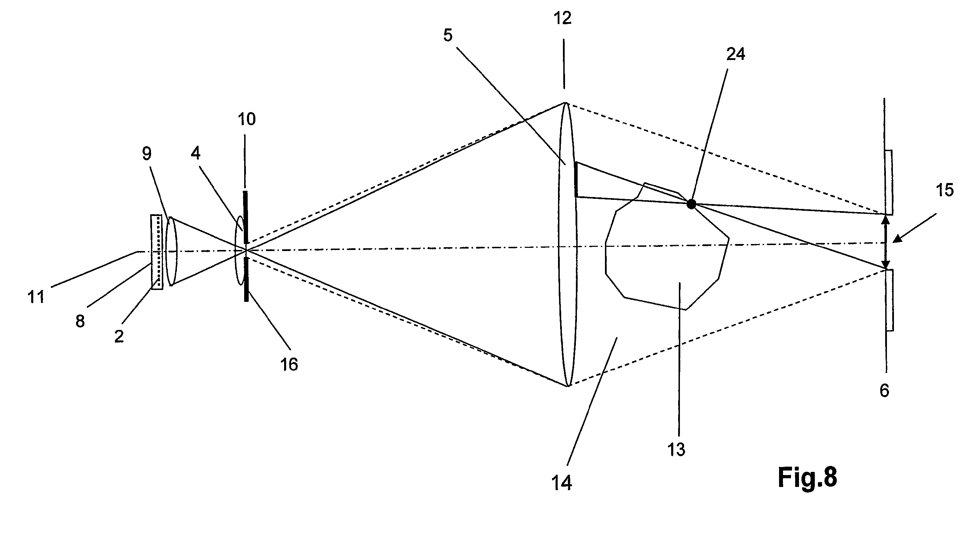

In Figur 8 ist die Projektionsvorrichtung gemäß Figur 1 bei Betrachtung eines rekonstruierten Punktes 24 der Szene 13 dargestellt. Das relativ große zweite Abbildungsmittel 5 im Gegensatz zu den beiden Abbildungsmitteln 4 und 9 muss nur in kleinen Bereichen aberrationsfrei sein. Zum besseren Verständnis wird nur ein rekonstruierter Punkt 24 der Szene 13 betrachtet, die aus vielen Punkten aufgebaut ist. Der Punkt 24 ist nur innerhalb des Betrachterfensters 15 sichtbar. Das Betrachterfenster 15 als Abbildung der ausgewählten Beugungsordnung von der Ebene 10 dient als Fenster, durch das hindurch der Betrachter die rekonstruierte Szene 13 beobachten kann. Damit keine Überlappungen aus höheren Beugungsordnungen entstehen, wurde bereits die bandbreitenbegrenzte Kodierung des Hologramms 2 beschrieben. Sie gewährleistet, dass sich die Beugungsordnungen in der Ebene 10 nicht überlappen. Dasselbe gilt auch für die Abbildung in die Betrachterebene 6. Jeder Punkt der rekonstruierten Szene 13 wird nur von einem Teil des Mikro-SLM 8 auf dem zweiten Abbildungsmittel 5 erzeugt. Die entsprechende Projektion der Randstrahlen des Betrachterfensters 15 durch den Punkt 24 auf das zweite Abbildungsmittel 5 zeigt anschaulich einen kleinen Bereich des Abbildungsmittels 5, der zur Rekonstruktion des Punkts 24 beiträgt. Das heißt, dass solch ein Bereich für jeden einzelnen Szenepunkt auf dem Abbildungsmittel 5 begrenzt ist. Diese Bereiche sind klein im Vergleich zu dem ausgedehnten zweiten Abbildungsmittel 5. Die Kohärenzforderungen beziehen sich daher nur auf diese kleinen Bereiche, insbesondere die Einhaltung der Forderung nach hinreichend kleiner Wellenfrontverzerrung << λ/10. Nur für diese kleinen Bereiche muss die Abbildung von hoher kohärenter Qualität sein, wobei alle Punkte der Szene 13 zu berücksichtigen sind. Eine extrem niedrige Wellenfrontverzerrung über das gesamte Abbildungsmittel 5 ist somit nicht erforderlich. Damit werden die Anforderungen an das zweite Abbildungsmittel 5 weitestgehend auf die geometrische Formtreue reduziert.

Des Weiteren nutzt die Projektionsvorrichtung den Mikro-SLM 8 nicht nur zur Rekonstruktion sehr großer zwei- und dreidimensionaler Szenen 13, die durch das Betrachterfenster 15 im Rekonstruktionsraum 14 gebildet werden, sondern verwendet ihn gleichzeitig vorteilhaft auch für Korrekturen der optischen Abbildungsmittel 4, 5 und 9. Für holographische Rekonstruktionen sollten aberrationsfreie Abbildungsmittel eingesetzt werden. Beispiele für die Korrekturen der Aberrationen werden im folgenden beschrieben. Aberrationen des dritten Abbildungsmittels 9 äußern sich als Phasenfehler, um die die Wellenfront von der idealen Welle abweicht. Für ein Hologramm ohne kodierte Information, bei dem eine ebene Welle den Mikro-SLM 8 verlässt, sollte die Welle beugungsbegrenzt in der Ebene 10 fokussiert sein, in welcher das erste Abbildungsmittel 4 und ein Raumfrequenzfilter 16 als Blende zur Unterdrückung unerwünschter Ordnungen und für andere Funktionen, wie der Korrektur von Aberrationen, angeordnet ist.

Aberrationen führen jedoch zu einer Verschmierung dieser oben erwähnten Fokussierung und somit zu Störungen im Raumfrequenzspektrum, die die Rekonstruktionen in ihrer Qualität beeinflussen. Diese Phasenfehler lassen sich leicht durch einen entsprechenden zusätzlichen Phasenhub korrigieren. Ein weiteres Mittel zur Korrektur des dritten Abbildungsmittels 9 wurde bereits im Zusammenhang mit der Funktion des Raumfrequenzfilters beschrieben.

Die stark vergrößerte Abbildung des Mikro-SLM 8 durch das erste Abbildungsmittel 4 auf das zweite Abbildungsmittel 5 ist regelmäßig mit Aberrationen behaftet. Vergrößernde Optiken für das Abbildungsmittel 4 sind beispielsweise Projektions-Optiken, wie sie in Rückprojektions-TV-Geräten eingesetzt und auch kommerziell verfügbar sind. Die Bildschärfe ist ein wichtiges Kriterium, so dass vor allem sphärische Aberrationen, aber auch Koma und Astigmatismus für diese Optiken bereits weitgehend unterdrückt sind. Obwohl verbleibende Verzeichnung und Bildfeldkrümmung für den Betrachter derartiger Geräte in der Projektion tolerierbar sind, erzeugen diese Aberrationen in der vorliegenden holographischen Projektionsvorrichtung erhebliche Verzerrungen bei der Rekonstruktion. Die Verzeichnung des ersten Abbildungsmittels 4 bedeutet eine laterale geometrische Abweichung der vergrößerten Abbildung des Mikro-SLM 8 auf das Abbildungsmittel 5. Die vom zweiten Abbildungsmittel 5 ausgehenden Wellen konvergieren dann nicht mehr an der vorgesehenen Position des rekonstruierten Objektpunkts, sondern werden verschoben.

Ein schwerwiegender Abbildungsfehler ist die Bildfeldkrümmung bei der Abbildung des Mikro-SLM 8 auf das zweite Abbildungsmittel 5. Die Bildfeldkrümmung bedeutet in erster Linie, dass die erforderlichen Phasenwerte auf dem Abbildungsmittel 5 verfälscht werden, was sich als dreidimensionale Verzerrung, also lateral und axial, auswirkt. Beide Effekte, Bildfeldkrümmung und Verzeichnung, sowie auch Koma und Astigmatismus können zwar mit entsprechendem Design und geringen Fertigungstoleranzen des ersten Abbildungsmittels 4 prinzipiell hinreichend klein gehalten werden, jedoch nur unter erhöhtem Aufwand. Vorteilhaft lässt sich die Phasenverfälschung durch die Bildfeldkrümmung in der Projektionsvorrichtung durch den Mikro-SLM 8 kompensieren. Diese Phasenfehler lassen sich durch einen zusätzlichen Phasenhub korrigieren. Ebenso können Koma und Astigmatismus durch Kodierung reduziert werden. Die Verzeichnung kann beispielsweise durch Wahl der Pixel des Mikro-SLM 8 kompensiert werden, indem die Hologramm-Werte auf den unter Berücksichtigung der Verzeichnung ermittelten Pixelpositionen kodiert werden. Auf ähnliche Weise entsprechend dem ersten Abbildungsmittel 4 werden auch die Aberrationen des zweiten Abbildungsmittels 5 mittels des Mikro-SLM 8 kompensiert. Die Abweichungen der vom zweiten Abbildungsmittels 5 ausgehenden Wellen müssen in der Regel weit unter λ/10 liegen. Das erfordert wiederum erhebliche Aufwendungen. Mittels der erwähnten Korrekturmöglichkeit lassen sich somit auch die Aberrationen bezüglich des zweiten Abbildungsmittels 5 einfach durch entsprechende Kodierung korrigieren.

Durch den Mikro-SLM 8 können grundsätzlich alle Aberrationen an den Abbildungsmitteln 4, 5 und 9 reduziert oder kompensiert werden. Die Aberrationen werden vor der Rekonstruktion auf geeignete Weise ermittelt. Die somit berechneten Phasenfehler lassen sich durch einen entsprechenden zusätzlichen Phasenhub des Mikro-SLM 8 korrigieren.

Die vorliegende Projektionsvorrichtung erlaubt, räumliche Lichtmodulatoren mit geringer Ausdehnung für die Rekonstruktion und Betrachtung großer zwei- oder dreidimensionaler Szenen zu verwenden. Der oder die Betrachter können sich bei der Beobachtung einer rekonstruierten Szene dabei in der Betrachterebene 6 bewegen. Es können zwei- und dreidimensionale Szenen gleichzeitig oder nacheinander dargestellt werden. Außerdem besteht die Projektionsvorrichtung aus kommerziell verfügbaren optischen Elementen mit relativ geringen Anforderungen an Herstellungsgenauigkeit und Aberrationen. Die Abbildungsmittel 4 und 5 lassen sich erstens durch den Mikro-SLM 8 korrigieren und benötigen zweitens nur eine kleine Wellenfrontverzerrung über einen kleinen Bereich des großen Abbildungsmittels 5.

Im Spezialfall reiner zweidimensionaler Abbildung, wie beim heutigen Fernsehen, erfolgt die Projektion nahe dem oder auf dem Abbildungsmittel 5. Das Hologramm 2 wird derart berechnet, dass in der Ebene 12 oder 23 des zweiten Abbildungsmittels 5 eine zweidimensionale Szene rekonstruiert wird. Darüber hinaus kann der Betrachter eine Ebene, in welcher eine Rekonstruktion der zweidimensionalen Szene erfolgt, beim Beobachten der Szene durch eine Neuberechnung des Hologramms 2 axial verschieben. Das heißt, dass die Darstellung an den Betrachter herangezogen oder von ihm wegbewegt werden kann. Ebenso können Details herausgezogen werden, um von dem Betrachter genauer beobachtet zu werden. Diese Aktionen können interaktiv vom jeweiligen Betrachter selbst vorgenommen werden.

Mögliche Einsatzgebiete der holographischen Projektionsvorrichtung können Displays für eine zwei- und/oder dreidimensionale Darstellung für den Privat- und Arbeits-Bereich sein, wie beispielsweise für Computer, Fernsehen, elektronische Spiele, Automobilindustrie zur Anzeige von Informationen oder der Unterhaltung, Medizintechnik, hier insbesondere für die minimal-invasive Chirurgie oder die räumliche Darstellung tomographisch gewonnener Daten oder auch für die Militärtechnik zur Darstellung von Geländeprofilen. Selbstverständlich kann die vorliegende Projektionsvorrichtung auch in anderen hier nicht genannten Bereichen eingesetzt werden.

## Patentansprüche

1. Projektionsvorrichtung zur holographischen Rekonstruktion von Szenen mit einem Lichtmodulator (8), einem Abbildungssystem (3) mit wenigstens zwei Abbildungsmittel (4, 5) und einer Beleuchtungseinrichtung (1) mit wenigstens einer Lichtquelle mit hinreichend kohärentem Licht zum Beleuchten eines in dem Lichtmodulator (8) kodierten Hologramms (2), wobei die wenigstens zwei Abbildungsmittel (4, 5) derart zueinander angeordnet sind, dass ein erstes Abbildungsmittel (4) zur vergrößerten Abbildung des Lichtmodulators (8) auf ein zweites Abbildungsmittel (5) und das zweite Abbildungsmittel (5) zur Abbildung einer Ebene (10) eines Raumfrequenzspektrums des Lichtmodulators (8) in eine wenigstens ein virtuelles Betrachterfenster (15) aufweisende Betrachterebene (6) vorgesehen sind, wobei das virtuelle Betrachterfenster (15) einer Beugungsordnung des Raumfrequenzspektrums entspricht, und die rekonstruierte Szene durch dieses Betrachterfenster (15) beobachtbar ist.

2. Projektionsvorrichtung nach Anspruch 1, bei der das erste Abbildungsmittel (4) in Strahlrichtung hinter dem Lichtmodulator (8) und das zweite Abbildungsmittel (5) zwischen dem ersten Abbildungsmittel (4) und der Betrachterebene (6) angeordnet sind.

3. Projektionsvorrichtung nach Anspruch 1, bei der ein Raumfrequenzfilter (16) in der Ebene (10), in der das Raumfrequenzspektrum des Lichtmodulators (8) vorliegt, angeordnet ist.

4. Projektionsvorrichtung nach Anspruch 1, bei der zur Bildung des Raumfrequenzspektrums ein drittes Abbildungsmittel (9) enthalten ist, das nahe dem Lichtmodulator (8) angeordnet ist.

5. Projektionsvorrichtung nach Anspruch 1, bei der eine rekonstruierte zwei- oder dreidimensionale Szene (13) in einem durch das virtuelle Betrachterfenster (15) und das zweite Abbildungsmittel (5) aufgespannten Rekonstruktionsraum (14) vorgesehen ist.

6. Projektionsvorrichtung nach einem der vorhergehenden Ansprüche, bei der das zweite Abbildungsmittel (5) eine Linse oder ein Spiegel ist.

7. Projektionsvorrichtung nach Anspruch 1, bei der ein Positionserfassungssystem (17) zur Bestimmung einer Augenposition wenigstens eines Betrachters beim Beobachten einer rekonstruierten Szene (13) enthalten ist.

8. Projektionsvorrichtung nach Anspruch 7, bei der zur Nachführung des wenigstens einen Betrachterfensters (15) entsprechend der Augenposition des wenigstens einen Betrachters wenigstens ein Ablenkelement (21) enthalten ist.

9. Projektionsvorrichtung nach Anspruch 8, bei der das Ablenkelement (21) zum lateralen und axialen Nachführen des virtuellen Betrachterfensters (15) vorgesehen ist.

10. Projektionsvorrichtung nach Anspruch 8, bei der das Ablenkelement (21) unmittelbar an dem zweiten Abbildungsmittel (5) angeordnet ist.

11. Projektionsvorrichtung nach Anspruch 10, bei der das Ablenkelement (21) eine steuerbare Prismenfunktion aufweist.

12. Projektionsvorrichtung nach Anspruch 10, bei der das Ablenkelement (21) eine steuerbare Linsenfunktion aufweist.

13. Projektionsvorrichtung nach Anspruch 1, bei der als Lichtmodulator (8) ein reflektiver Lichtmodulator enthalten ist, wobei zur Strahlführung wenigstens eines aus der Beleuchtungseinrichtung (1) austretenden Lichtbündels ein Strahlteilerelement (20) enthalten ist.

14. Projektionsvorrichtung nach Anspruch 13, bei der das Strahlteilerelement (20) zwischen dem Lichtmodulator (8) und dem ersten Abbildungsmittel (4) angeordnet ist.

15. Projektionsvorrichtung nach einem der Ansprüche 1 oder 13, bei der für jeden Betrachter zwei Kanäle zur Bildung von zwei virtuellen Betrachterfenstern jeweils eine Lichtquelle (1), einen Lichtmodulator (8), ein erstes Abbildungsmittel (4) und ein drittes Abbildungsmittel (5) aufweisen.

16. Projektionsvorrichtung nach einem der Ansprüche 1 oder 13, bei der für eine simultane farbige Rekonstruktion drei parallele Kanäle, welche jeweils eine Lichtquelle (1), einen Lichtmodulator (8), ein erstes Abbildungsmittel (4) und ein drittes Abbildungsmittel (9) aufweisen, für die drei Grundfarben enthalten sind.

17. Projektionsvorrichtung nach einem der vorhergehenden Ansprüche, bei der der Lichtmodulator (8) ein räumlicher Mikro-Lichtmodulator ist.

18. Verfahren zur holographischen Rekonstruktion von Szenen, bei dem ein Abbildungssystem (3) mit wenigstens zwei Abbildungsmittel (4,5) hinreichend kohärentes Licht einer Beleuchtungseinrichtung (1) mit wenigstens einer Lichtquelle in eine Betrachterebene (6) abbildet, wobei die wenigstens eine Lichtquelle ein mit einem Hologramm (2) kodierten Lichtmodulator (8) beleuchtet, wobei in einem ersten Schritt in einer Ebene (10) eines ersten Abbildungsmittels (4) ein Raumfrequenzspektrum als Fourier-Transformierte des kodierten Hologramms (2) entsteht, wonach in einem zweiten Schritt das erste Abbildungsmittel (4) den Lichtmodulator (8) in eine Ebene (12, 23) des zweiten Abbildungsmittels (5) abbildet, wobei das zweite Abbildungsmittel (5) das Raumfrequenzspektrum aus der Ebene (10) in wenigstens ein virtuelles Betrachterfenster (15) der Betrachterebene (6) abbildet, wodurch eine rekonstruierte Szene (13) in einem von dem zweiten Abbildungsmittel (5) und dem virtuellen Betrachterfenster (15) aufgespannten Rekonstruktionsraum (14) wenigstens einem Betrachter vergrößert dargeboten wird und durch die vergrößerte Abbildung des Lichtmodulators (8) der Rekonstruktionsraum (14) in seiner Größe ausgedehnt wird.

19. Verfahren nach Anspruch 18, bei dem das zweite Abbildungsmittel (5) das Raumfrequenzspektrum in das virtuelle Betrachterfenster (15), durch welches ein Betrachter die rekonstruierte Szene (13) beobachtet, abbildet.

20. Verfahren nach Anspruch 18, bei dem nahe des Lichtmodulators (8) ein drittes Abbildungsmittel (9) angeordnet wird, welches in seiner bildseitigen Brennebene (10) das Raumfrequenzspektrum des in dem Lichtmodulator (8) kodierten Hologramms (2) erzeugt.

21. Verfahren nach einem der Ansprüche 18 oder 19, bei dem ein Raumfrequenzfilter (16) in dem Abbildungssystem (3) ein ausgewähltes Periodizitätsintervall des Raumfrequenzspektrums durchlässt.

22. Verfahren nach Anspruch 21, bei dem der Raumfrequenzfilter (16) Aberrationen der Abbildungsmittel (4, 5 ,9) kompensiert.

23. Verfahren nach einem der vorhergehenden Ansprüche, bei dem Aberrationen der Abbildungsmittel (4, 5, 9) bei der Berechnung des Hologramms (2) berücksichtigt und durch den Lichtmodulator (8) kompensiert werden.

24. Verfahren nach Anspruch 18, bei dem bei einer Berechnung des Hologramms (2) die Bandbreite des Raumfrequenzspektrums in der Ebene (10) begrenzt wird.

25. Verfahren nach Anspruch 18, bei dem ein Positionserfassungssystem (17) Augenpositionen wenigstens eines Betrachters beim Beobachten der rekonstruierten Szene (13) erfasst.

26. Verfahren nach Anspruch 25, bei dem die holographische Kodierung des Lichtmodulators (8) bei der Änderung der Augenposition des Betrachters aktualisiert wird.

27. Verfahren nach Anspruch 26, bei dem die rekonstruierte Szene (13) derart kodiert wird, dass diese in Abhängigkeit von der Änderung der Augenposition des Betrachters horizontal und/oder vertikal verschoben und/oder im Winkel gedreht sichtbar wird.

28. Verfahren nach Anspruch 25, bei dem wenigstens ein virtuelles Betrachterfenster (15) in der Betrachterebene (6) entsprechend der Augenposition des Betrachters nachgeführt wird.

29. Verfahren nach Anspruch 28, bei dem wenigstens ein Ablenkelement (21) das wenigstens eine virtuelle Betrachterfenster (15) nachgeführt.

30. Verfahren nach Anspruch 18, bei dem das Hologramm (2) derart berechnet wird, dass in der Ebene (12, 23) des zweiten Abbildungsmittels (5) eine zweidimensionale Szene rekonstruiert wird.

31. Verfahren nach Anspruch 18, bei dem der Betrachter eine Ebene, in welcher eine Rekonstruktion einer zweidimensionalen Szene erfolgt, beim Beobachten der Szene durch eine Neuberechnung des Hologramms (2) axial verschiebt.

32. Verfahren nach Anspruch 18, bei dem eine farbige Rekonstruktion der Szene (13) sequentiell in den drei Grundfarben erfolgt.

33. Verfahren nach Anspruch 18, bei dem eine farbige Rekonstruktion der Szene (13) simultan in den drei Grundfarben erfolgt.

34. Verfahren nach Anspruch 33, bei dem die simultane farbige Rekonstruktion der Szene (13) über drei Kanäle, in welchen jeweils eine Lichtquelle (1), ein Lichtmodulator (8), ein erstes Abbildungsmittel (4) und ein drittes Abbildungsmittel (9) angeordnet sind, erfolgt.

## Claims

1. Projection device for the holographic reconstruction of scenes comprising a light modulator (8), an imaging system (3) with at least two imaging means (4, 5) and an illumination means (1) with at least one light source with sufficiently coherent light for illuminating a hologram (2) which is encoded on the light modulator (8), where the at least two imaging means (4, 5) are arranged in relation to each other such that a first imaging means (4) images the light modulator (8) in an enlarged fashion on to a second imaging means (5) and that the second imaging means (5) images a plane (10) of a spatial frequency spectrum of the light modulator (8) into an observer plane (6), which comprises at least one observer window (15), where the observer window (15) corresponds with a diffraction order of the spatial frequency spectrum and where the reconstructed scene is visible through this observer window (15).

2. Projection device according claim 1 where the first imaging means (4) is disposed behind the light modulator (8), seen in the direction of light propagation, and the second imaging means (5) is disposed between the first imaging means (4) and the observer plane (6).

3. Projection device according to claim 1 where a spatial frequency filter (16) is disposed in the plane (10) which comprises the spatial frequency spectrum of the light modulator (8).

4. Projection device according to claim 1 where a third imaging means (9), for the generation of the spatial frequency spectrum, is disposed near the light modulator (8).

5. Projection device according to claim 1 where a reconstructed two- or three-dimensional scene (13) is provided in a reconstruction space (14), which stretches between the virtual observer window (15) and the second imaging means (5).

6. Projection device according to one of the preceding claims where the second imaging means (5) is a lens or mirror.

7. Projection device according to claim 1 which comprises a position detection system (17) for the detection of changes in an eye position of at least one observer who watches the reconstructed scene (13).

8. Projection device according to claim 7 which comprises at least one deflection element (21) for tracking the at least one observer window (15) according to the eye position of the at least one observer.

9. Projection device according to claim 8 where the deflection element (21) is provided for tracking the virtual observer window (15) laterally and axially.

10. Projection device according to claim 8 where the deflection means (21) is disposed next to the second imaging means (5).

11. Projection device according to claim 10 where the deflection means (21) has the function of a controllable prism.

12. Projection device according to claim 10 where the deflection means (21) has the function of a controllable lens.

13. Projection device according to claim 1 where the light modulator (8) is a reflective light modulator, and which comprises at least one beam splitter element (20) for guiding at least one bundle of rays emitted by the illumination device (1).

14. Projection device according to claim 13 where the beam splitter element (20) is disposed between the light modulator (8) and the first imaging means (4).

15. Projection device according to one of claims 1 or 13 where two channels are provided for each observer for forming two virtual observer windows, each of said channels comprising a light source (1), a light modulator (8), a first imaging means (4) and a third imaging means (5).

16. Projection device according to one of claims 1 or 13 where three parallel channels are provided for simultaneous colour reconstruction, i.e. one for each primary colour, each of said channels comprising a light source (1), a light modulator (8), a first imaging means (4) and a third imaging means (9).

17. Projection device according to one of the preceding claims where the light modulator (8) is a micro spatial light modulator.

18. Method for the holographic reconstruction of scenes where a projection system (3) with at least two imaging means (4, 5) images sufficiently coherent light of an illumination device (1) with at least one light source into an observer plane (6), where the at least one light source illuminates a light modulator (8) which is encoded with a hologram (2), where in a first step a spatial frequency spectrum is generated as a Fourier transform of the encoded hologram (2) in a plane (10) of a first imaging means (4), whereupon in a second step the first imaging means (4) images the light modulator (8) into a plane (12, 23) of the second imaging means (5), where the second imaging means (5) images the spatial frequency spectrum from plane (10) into at least one virtual observer window (15) in the observer plane (6), whereby a reconstructed scene (13) is presented to at least one observer in an enlarged fashion in a reconstruction space (14) which stretches between the second imaging means (5) and the virtual observer window (15), where the size of the reconstruction space (14) is expanded due to the enlarged image of the light modulator (8).

19. Method according to claim 18 where the second imaging means (5) images the spatial frequency spectrum into the virtual observer window (15), through which an observer watches the reconstructed scene (13).

20. Method according to claim 18 where a third imaging means (9) is disposed near the light modulator (8), said third imaging means (9) generating in its image-side focal plane (10) the spatial frequency spectrum of the hologram (2) encoded on the light modulator (8).

21. Method according to one of claims 18 or 19 where a spatial frequency filter (16) provided in the projection system (3) lets pass a selected periodicity interval of the spatial frequency spectrum.

22. Method according to claim 21 where the spatial frequency filter (16) compensates aberrations of the imaging means (4, 5, 9).

23. Method according to one of the preceding claims where aberrations of the imaging means (4, 5, 9) are taken into account when computing the hologram (2) and compensated by the light modulator (8).

24. Method according to claim 18 where the bandwidth of the spatial frequency spectrum in the plane (10) is limited during a computation of the hologram (2).

25. Method according to claim 18 where a position detection system (17) detects eye positions of at least one observer who watches the reconstructed scene (13).

26. Method according to claim 25 where the holographic code on the light modulator (8) will be updated, if the eye positions of the observer change.

27. Method according to claim 26 where the reconstructed scene (13) is encoded such that it appears horizontally and/or vertically displaced and/or turned by an angle in accordance with the change in the eye position.

28. Method according to claim 25 where at least one virtual observer window (15) in the observer plane (6) is tracked in accordance with the eye position of the observer.

29. Method according to claim 28 where at least one deflection element (21) tracks the at least one virtual observer window (15).

30. Method according to claim 18 where the hologram (2) is computed such that a two-dimensional scene is reconstructed in the plane (12, 23) of the second imaging means (5).

31. Method according to claim 18 where the observer who is watching the scene axially displaces a plane in which a reconstruction of a two-dimensional scene is provided by way of re-computing the hologram (2).

32. Method according to claim 18 where a colour reconstruction of the scene (13) is performed sequentially for the three primary colours.

33. Method according to claim 18 where a colour reconstruction of the scene (13) is performed simultaneously for the three primary colours.

34. Method according to claim 33 where the simultaneous colour reconstruction of the scene (13) is performed using three parallel channels, each of which comprising a light source (1), a light modulator (8), a first imaging means (4) and a third imaging means (9).

## Revendications

1. Dispositif de projection pour la reconstruction holographique de scènes, comportant un modulateur de lumière (8), un système de reproduction (3) avec au moins deux moyens de reproduction (4, 5), et un dispositif d'éclairage (1) avec au moins une source lumineuse avec une lumière suffisamment cohérente pour éclairer un hologramme (2) codé dans le modulateur de lumière (8), les deux moyens de reproduction (4, 5) étant disposés l'un par rapport à l'autre de telle sorte qu'un premier moyen de reproduction (4) est prévu pour une reproduction agrandie du modulateur de lumière (8) sur ledit au moins un deuxième moyen de reproduction (5), et le deuxième moyen de reproduction (5) est prévu pour reproduire un plan (10) d'un spectre de fréquences spatiales du modulateur de lumière (8) dans un plan d'observation (6) comportant au moins une fenêtre d'observation (15) virtuelle, ladite fenêtre d'observation (15) virtuelle correspondant à un ordre de diffraction du spectre de fréquences spatiales, et la scène reconstruite pouvant être observée par ladite fenêtre d'observation (15).

2. Dispositif de projection selon la revendication 1, dans lequel le premier moyen de reproduction (4) est monté derrière le modulateur de lumière (8) par référence au sens de rayonnement et le deuxième moyen de reproduction (5) est monté entre le premier moyen de reproduction (4) et le plan d'observation (6).

3. Dispositif de projection selon la revendication 1, dans lequel un filtre de fréquences spatiales (16) est monté dans le plan (10), dans lequel est situé le spectre de fréquences spatiales du modulateur de lumière (8).

4. Dispositif de projection selon la revendication 1, dans lequel, pour la formation du spectre de fréquences spatiales, il est prévu un troisième moyen de reproduction (9) qui est monté à proximité du modulateur de lumière (8).

5. Dispositif de projection selon la revendication 1, dans lequel une scène (13) bidimensionnelle ou tridimensionnelle reconstruite est prévue dans un espace de reconstruction (14) déployé par la fenêtre d'observation (15) virtuelle et le deuxième moyen de reproduction (5).

6. Dispositif de projection selon l'une quelconque des revendications précédentes, dans lequel le deuxième moyen de reproduction (5) est une lentille ou un miroir.

7. Dispositif de projection selon la revendication 1, dans lequel est contenu un système d'enregistrement de position (17) destiné à déterminer une position des yeux d'au moins un observateur au moment de l'observation d'une scène (13) reconstruite.

8. Dispositif de projection selon la revendication 7, dans lequel est contenu au moins un élément de déviation (21) en vue de l'ajustement de ladite au moins une fenêtre d'observation (15) conformément à la position des yeux dudit au moins un observateur.

9. Dispositif de projection selon la revendication 8, dans lequel l'élément de déviation (21) est prévu pour l'ajustement latéral et axial de la fenêtre d'observation (15) virtuelle.

10. Dispositif de projection selon la revendication 8, dans lequel l'élément de déviation (21) est disposé directement au niveau du deuxième moyen de reproduction (5).

11. Dispositif de projection selon la revendication 10, dans lequel l'élément de déviation (21) possède une fonction de prisme apte à être commandée.

12. Dispositif de projection selon la revendication 10, dans lequel l'élément de déviation (21) possède une fonction de lentille apte à être commandée.

13. Dispositif de projection selon la revendication 1, dans lequel le modulateur de lumière (8) est un modulateur de lumière réflectif, sachant que pour le guidage d'au moins un faisceau de lumière sortant du dispositif d'éclairage (1), ledit dispositif contient un élément de séparation des rayons (20).

14. Dispositif de projection selon la revendication 13, dans lequel l'élément de séparation des rayons (20) est disposé entre le modulateur de lumière (8) et le premier moyen de reproduction (4).

15. Dispositif de projection selon la revendication 1 ou 13, dans lequel, pour chaque observateur, deux canaux destinés à former deux fenêtres d'observation virtuelles comportent chacun une source lumineuse (1), un modulateur de lumière (8), un premier moyen de reproduction (4) et un troisième moyen de reproduction (9).

16. Dispositif de projection selon la revendication 1 ou 13, dans lequel, pour une reconstruction en couleur simultanée, ledit dispositif contient trois canaux parallèles pour les trois couleurs de base, lesquels comportent chacun une source lumineuse (1), un modulateur de lumière (8), un premier moyen de reproduction (4) et un troisième moyen de reproduction (9).

17. Dispositif de projection selon l'une quelconque des revendications précédentes, dans lequel le modulateur de lumière (8) est un micro-modulateur de lumière spatial.

18. Procédé pour la reconstruction holographique de scènes, dans lequel un système de reproduction (3) avec au moins deux moyens de reproduction (4, 5) reproduit dans un plan d'observation (6) une lumière suffisamment cohérente d'un dispositif d'éclairage (1) comportant au moins une source lumineuse, ladite au moins une source lumineuse éclairant un modulateur de lumière (8) codé avec un hologramme (2), dans lequel procédé, dans une première étape, il se forme dans un plan (10) d'un premier moyen de reproduction (4) un spectre de fréquences spatiales en tant que transformée de Fourier de l'hologramme (2) codé, à la suite de quoi, dans une deuxième étape, le premier moyen de reproduction (4) reproduit le modulateur de lumière (8) dans un plan (12, 23) du deuxième moyen de reproduction (5), le deuxième moyen de reproduction (5) reproduisant le spectre de fréquences spatiales issu du plan (10) dans au moins une fenêtre d'observation (15) virtuelle du plan d'observation (6), moyennant quoi une scène (13) reconstruite est présentée sous forme agrandie à au moins un observateur dans un espace de reconstruction (14) déployé par le deuxième moyen de reproduction (5) et la fenêtre d'observation (15) virtuelle, et, sous l'effet de la reproduction agrandie du modulateur de lumière (8), l'espace de reconstruction (14) est dilaté en taille.

19. Procédé selon la revendication 18, dans lequel le deuxième moyen de reproduction (5) reproduit le spectre de fréquences spatiales dans la fenêtre d'observation (15) virtuelle, à travers laquelle un observateur observe une scène (13) reconstruite.

20. Procédé selon la revendication 18, dans lequel à proximité du modulateur de lumière (8) est monté un troisième moyen de reproduction (9) qui, dans son plan focal (10) du côté image, génère le spectre de fréquences spatiales de l'hologramme (2) codé dans le modulateur de lumière (8).

21. Procédé selon la revendication 18 ou 19, dans lequel un filtre de fréquences spatiales (16) dans le système de reproduction (3) laisse passer un intervalle de périodicité sélectionné du spectre de fréquences spatiales.

22. Procédé selon la revendication 21, dans lequel le filtre de fréquences spatiales (16) compense des aberrations des moyens de reproduction (4, 5, 9).

23. Procédé selon l'une quelconque des revendications précédentes, dans lequel des aberrations des moyens de reproduction (4, 5, 9) sont prises en compte lors du calcul de l'hologramme (2) et sont compensées par le modulateur de lumière (8).

24. Procédé selon la revendication 18, dans lequel, au moment d'un calcul de l'hologramme (2), la largeur de bande du spectre de fréquences spatiales est limitée dans le plan (10).

25. Procédé selon la revendication 18, dans lequel un système d'enregistrement de position (17) enregistre des positions des yeux d'au moins un observateur au moment de l'observation d'une scène (13) reconstruite.

26. Procédé selon la revendication 25, dans lequel le codage holographique du modulateur de lumière (8) est actualisé lors de la variation de la position des yeux de l'observateur.

27. Procédé selon la revendication 26, dans lequel la scène (13) reconstruite est codée de telle sorte que celle-ci, en fonction de la variation de la position des yeux de l'observateur, est déplacée horizontalement et/ou verticalement et/ou est tournée selon un angle pour devenir visible.

28. Procédé selon la revendication 25, dans lequel au moins une fenêtre d'observation (15) virtuelle est ajustée dans le plan d'observation (6) conformément à la position des yeux de l'observateur.

29. Procédé selon la revendication 28, dans lequel au moins un élément de déviation (21) ajuste ladite au moins une fenêtre d'observation (15) virtuelle.

30. Procédé selon la revendication 18, dans lequel l'hologramme (2) est calculé de telle sorte qu'une scène bidimensionnelle est reconstruite dans le plan (12, 23) du deuxième moyen de reproduction (5).

31. Procédé selon la revendication 18, dans lequel, au moment de l'observation de la scène, l'observateur déplace axialement, par un nouveau calcul de l'hologramme (2), un plan dans lequel se produit une reconstruction d'une scène bidimensionnelle.

32. Procédé selon la revendication 18, dans lequel une reconstruction en couleur de la scène (13) se produit séquentiellement dans les trois couleurs de base.

33. Procédé selon la revendication 18, dans lequel une reconstruction en couleur de la scène (13) se produit simultanément dans les trois couleurs de base.

34. Procédé selon la revendication 33, dans lequel la reconstruction en couleur simultanée de la scène (13) se produit par l'intermédiaire de trois canaux, dans chacun desquels sont disposés une source lumineuse (1), un modulateur de lumière (8), un premier moyen de reproduction (4) et un troisième moyen de reproduction (9).
